Europäisches Patentamt

European Patent Office

Office européen des brevets

(11) Veröffentlichungsnummer: **0 282 649**

**A1**

(12) **EUROPÄISCHE PATENTANMELDUNG**

(21) Anmeldenummer: **87118802.5**

(22) Anmeldetag: **18.12.87**

(51) Int. Cl.⁴: **H01M 2/12 , H01M 2/04**

(30) Priorität: **13.02.87 DE 3704536**

(43) Veröffentlichungstag der Anmeldung:
**21.09.88 Patentblatt 88/38**

(84) Benannte Vertragsstaaten:
**BE CH DE ES FR GB GR LI**

(71) Anmelder: **VARTA Batterie Aktiengesellschaft
Am Leineufer 51
D-3000 Hannover 21(DE)**

(72) Erfinder: **Nientiedt, Heinz-Werner, Dr.
Dipl.-Chem.
Einsteinstrasse 46
D-7090 Ellwangen(DE)**
Erfinder: **Sekler, Josef
Albstrasse 9
D-7090 Ellwangen(DE)**

(74) Vertreter: **Kaiser, Dieter Ralf, Dipl.-Ing.
Gundelhardtstrasse 72
D-6233 Kelkheim/Ts.(DE)**

(54) **Dicht verschlossenes galvanisches Element.**

㊸ Dichtungskörper aus Kunststoff, welche die Gehäusebecher galvanischer Elemente vom Rundzellentyp verschließen, sind häufig mit Sollbruchstellen bzw. Berstmembranen versehen, um einer unkontrollierten Explosion der Zelle bei unzulässiger Erwärmung vorzubeugen. Als eine Schwachstelle im Wandmaterial ist eine solche Berstmembran jedoch durch Spannungsrißkorrosion, die sich bei hoher mechanischer Belastung und unter der Wirkung von Elektrolytlauge ausbreitet, besonders gefährdet. Einen Schutz bietet die Beschichtung der dem Zellinnern zugekehrten Oberfläche des Dichtungskörpers mit Bitumen, Kunstharz, Klebstoff oder einem Lack in solchem Umfang, daß zumindest die Berstmembran (3) und ihr nahes Umfeld durch einen Film (5) porenfrei abgedeckt sind. Der vorgesehene Berstdruck erleidet dank dieser Maßnahme keine Minderung.

## Dicht verschlossenes galvanisches Element

Die Erfindung betrifft ein galvanisches Element it negativer Zinkelektrode und alkalischem Elektrolyten, dessen Gehäuse durch ein Dichtungselement aus Kunststoff verschlossen ist, welches eine als Berstmembran oder Kerbe ausgebildete Sollbruchstelle aufweist.

Insbesondere bezieht sich die Erfindung auf Elemente vom Alkali-Mangan-Typ mit einem Gehäuse in Form einer Rundzelle. Bei dieser wird das Gehäuse im allgemeinen von einem Stahlbecher gebildet, der die Elektrodenmaterialien aufnimmt und durch eine Kunststoffdichtung flüssigkeitsdicht verschlossen ist. Der Stahlbecher fungiert dabei als positiver Ableiter und Zellenpol.

Um bei unzulässig hohen Innendrucken, wie sie Überhitzung der Zelle oder durch unbeabsichtigte Falschpolung ausgelöst werden können, den Benutzer vor einer Zellenexplosion zu schützen, sind die Kunststoffdichtungen oft mit Sollbruchstellen versehen. Diese Stellen verminderter Festigkeit halten normalen Betriebsdrucken stand und gewährleisten unter Beschränkung auf ihre eigene Zerstörung ein Entspannen der Zelle, ehe der Innendruck unkontrollierbare Ausmaße erreicht.

Gewöhnlich sind Sollbruchstellen bei Kunststoffdichtungen durch weitgehendes Reduzieren der Materialstärke in dem nämlichen Bereich gebildet. In diesem Sinne zeigt der aus der US-PS 4,476,200 bekannte Dichtungskörper als Sollbruchstelle eine Berstmembran. Die Sollbruchstelle kann beispielsweise aber auch von einer Teilfläche des scheibenförmigen Dichtungskörpers gebildet sein, die eine geringere Wanddicke als ihre Umgebung besitzt und darüber hinaus durch eine umlaufende Kerbe oder Bruchlinie noch geringerer Materialstärke von dieser Umgebung abgegrenzt ist.

Durch die Anordnung einer Sollbruchstelle darf die Brauchbarkeit der Kunststoffdichtung jedoch nicht infrage gestellt werden. Ihre chemische Beständigkeit gegen Elektrolytangriff muß gewahrt bleiben, ihre gute Formbeständigkeit zur Aufrechterhaltung des Preßdrucks darf nicht nachlassen und die Permeationsrate für Sauerstoff, Wasser und Elektrolyt muß nach wie vor gering sein.

Soweit diesen grundsätzlichen Forderungen an eine Dichtung vom Material her Rechnung getragen werden konnte, hat sich vor anderen thermoplastischen Kunststoffen wie Polyäthylen, Polypropylen, Polyäthylen-Polyproylen-Copolymeren, Polyphenylenoxid oder einem Acrylonitril-Butadien-Styrol-Terpolymer bei alkalischen Zink-Braunsteinzellen Polyamid besonders bewährt, weil es sich durch hohe Formbeständigkeit auszeichnet und sich auch hinsichtlich seiner chemischen Beständigkeit zufriedenstellend verhält. Dichtungen auf Polyamidbasis haben sich dieser Eigenschaften wegen auch gerade im Rundzellenbereich weitgehend durchgesetzt.

Indessen haben Erfahrungen aus der Praxis gezeigt, daß bei mit Berstmembranen versehenen Polyamiddichtungen der Berstdruck auf einen Bruchteil (ca. 1/10) seines ursprünglichen Sollwertes absinkt, wenn die Dichtung der gleichzeitigen Einwirkung von Lauge und höherer Temperatur ausgesetzt war. Als Ursache für diesen Abfall, der ein vorzeitiges Ansprechen der Berstmembran zur Folge hat, wurde eine Spannungsrißkorrosion erkannt, die unter dem Einfluß des Elektrolyts entsteht.

Der Erfindung liegt daher die Aufgabe zugrunde, eine Dichtung mit Sollbruchstelle anzugeben, bei der insbesondere dieser Nachteil nicht vorhanden ist.

Die Aufgabe wird erfindungsgemäß mit den im kennzeichnenden Tel von Anspruch 1 angegebenen Mitteln gelöst.

Danach bleibt die mechanische Widerstandsfähigkeit der Sollbruchstelle bzw. der Berstmembran in einem vorgesehenen bestimmten Umfang auch unter ungewöhnlichen Betriebsbedingungen der Zelle erhalten, wenn durch Aufbringen eines Beschichtungsmittels auf die dem Elektrolyten zugekehrte Unterseite der Dichtung zumindest die Sollbruchstelle vollständig bedeckt ist, so daß sie von der Lauge nicht benetzt werden kann. Gegebenenfalls ist es günstig, z.B. aus fertigungstechnischen Gründen, den Dichtungskörper allseitig zu beschichten.

Als Beschichtungsmittel eignen sich neben Bitumen und Paraffin verschiedene Kunstharze wie Vinylverbindungen, Polycarbonate, Polystyrol, Acrylnitril, ferner Klebstoffe wie Fettsäure-Polyamide, Polyisobutylen-Haftkleber, kalt aushärtende Cyanacrylate sowie Schmelzkleber auf der Basis von Polyamiden und schließlich alkalibeständige Lacke.

Indem die Sollbruchstelle auf diese Weise dem Korrosionsangriff des Laugeelektrolyten entzogen ist, kann sie einer kritischen Zugspannung, auch bei erhöhter Temperatur, mit unverminderter mechanischer Belastbarkeit widerstehen: der Berstdruck bleibt konstant.

Voraussetzung für den Erfolg der erfindungsgemäßen Maßnahme ist jedoch stets, daß das Beschichtungsmaterial auf dem Dichtungselement gut haftet, daß die Beschichtung im kritischen Bereich flächendeckend ist, daß die Elektrolytbeständigkeit des Beschichtungsmittels zumindest für die Lebensdauer der Zelle ausreichend ist und daß der ggfs. von der Beschichtung nicht erfaßte, dem Elektrolyten zugängliche Teil des Dichtungselements keine nennenswerte Beeinflussung seiner mechanischen Eigenschaften erfährt.

Durch die erfindungsgemäße Schutzschicht auf der elektrolytseitigen Oberfläche des Dichtungselements werden die drei bereits genannten Forderungen, nämlich chemische Beständigkeit, Formbeständigkeit und geringe Permeabilität, die sonst vom Dichtungsmaterial allein erfüllt werden müssen, nunmehr von zwei Materialien, nämlich demjenigen der Dichtung und dem des Beschichtungsmittels, getragen.

Aus der Primärzellentechnik sind übrigens Dichtungskonstruktionen bekannt, bei denen ein thermoplastischer Verschlußkörper stellenweise mit elastischen Beschichtungen, u.a. aus Bitumen (DE-PS 1 937 605 und DE-PS 2 541 926) versehen ist. Diese Beschichtungen sind jedoch ausschließlich in der Dichtungszone lokalisiert, wo sie den Verschlußkörper zusätzlich mit dem Gehäusebecher oder einer zentrisch eingeführten Stabelektrode verkleben und die Abdichtung auf diese Weise perfektionieren. Eine Abdeckung speziell der Sollbruchstelle, ist diesen Druckschriften nicht zu entnehmen.

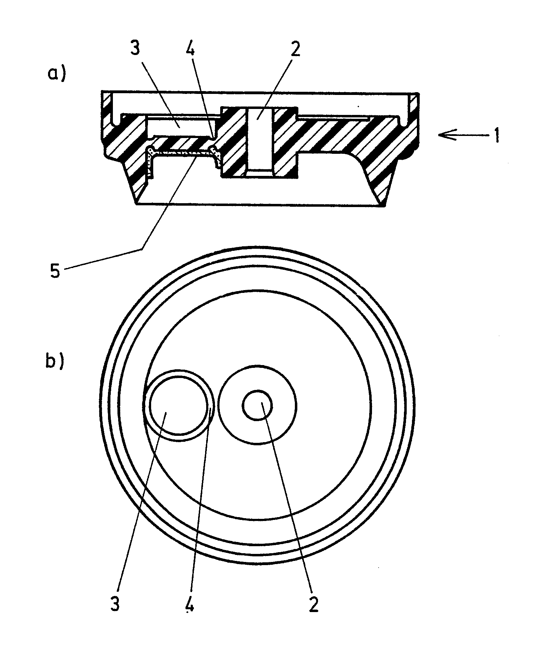

Die Figur zeigt ein Dichtungselement gemäß der Erfindung.

Das gemäß Teilfigur a) im Querschnitt dargestellte Dichtungselement 1 wird als Verschlußteil von Rundzellen beispielsweise des Typs LR 14 (Babyzelle) verwendet und besteht vorzugsweise aus Polyamid 66 (Handelsname Ultramid A3K der BASF). Es ist mit einer zentralen Öffnung 2 zur Durchführung des negativen Polableiters (nicht dargestellt) und einer scheibenförmigen Berstmembran 3 mit umlaufender Kerbe 4 versehen. Eine filmartige, porenfreie Deckschicht 5 aus einem der angegebenen Stoffe, die in den meisten Fällen aus Lösungen in organischen Lösungsmitteln aufgebracht werden können, überzieht hier der Berstmembran elektrolytseitig und deckt darüber hinaus auch ihre nähere Umgebung mit ab. Es würde aber auch einer erfindungsgemäßen Ausführung entsprechen, wenn nur die Kerbe eine schützende Bedeckung aufweist.

Teilfigur b) gibt das Dichtungselement in der Draufsicht wieder.

Der Erfolg erfindungsgemäßer Beschichtungen des Dichtungskörpers, zumindest im Sollbruchstellenbereich, konnte in verschiedenen Testserien bestätigt werden.

Beispiel:

Rundzellen der Type LR 14 mit Dichtungen aus Polyamid wurden bei 70°C gelagert.

Nach 28 Tagen waren von dem Kollektiv mit unbeschichteten Dichtungen 80% geborsten. Der Rest enthielt soviel Gas, wie es etwa einem Binnendruck von ca. 6 bar entsprach. Der Berstdruck der Dichtungen aus den noch nicht geborstenen Zellen betrug zwischen 10 und 40 bar.

Ein Vergleichskollektiv mit Dichtungen aus der gleichen Charge hatte keine Ausfälle. Diese Dichtungen waren im Bereich der Berstkerbe mit einer Bitumenlösung beschichtet worden. Diese Zellen enthielten vergleichbare Gasvolumina wie das erste Kollektiv. Der Berstdruck der Dichtungen lag nach Lagerung bei 54 bar

Im Frischzustand betrug der Berstdruck der Dichtungen ca. 60 bar. Dieser Wert wurde durch die Beschichtung nicht meßbar verändert.

## Ansprüche

1. Galvanisches Element mit negativer Zinkelektrode und alkalischem Elektrolyten, dessen Gehäuse durch ein Dichtungselement aus Kunststoff verschlossen ist, welches eine als Berstmembran oder Kerbe ausgebildete Sollbruchstelle aufweist, dadurch gekennzeichnet, daß die Dichtung zumindest im Bereich der Sollbruchstelle mit einer im wesentlichen porenfreien, filmartigen und gegen den Elektrolyten beständigen Deckschicht versehen ist.

2. Galvanisches Element nach Anspruch 1, dadurch gekennzeichnet, daß die Deckschicht aus Bitumen besteht.

3. Galvanisches Element nach Anspruch 1, dadurch gekennzeichnet, daß die Deckschicht aus einem Klebstoff auf Fettsäure-Polyamid-Basis besteht.

4. Galvanisches Element nach Anspruch 1, dadurch gekennzeichnet, daß die Beschichtung aus einem alkalibeständigen Lack besteht.

5. Galvanisches Element nach einem der Ansprüche 1 bis 4, dadurch gekennzeichnet, daß die Dichtung aus Polyamid 66 besteht.

6. Galvanisches Element nach den Ansprüchen 1 bis 5, dadurch gekennzeichnet, daß die Beschichtung auf die gesamte Oberfläche des Dichtungselements ausgedehnt ist.

0 282 649

Europäisches
Patentamt

**EUROPÄISCHER RECHERCHENBERICHT**

Nummer der Anmeldung

EP 87 11 8802

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 107 267 (UNION CARBIDE) * Ansprüche 1,5; Seite 10, Zeile 13 - Seite 11, Zeile 31; Seite 8, Zeilen 1-5; Beispiel 1; Seite 22, Zeilen 23-27; Tabelle 4, Beispiel 4; Figur 4 * | 1,2,3,6 | H 01 M 2/12 H 01 M 2/04 |
| Y | --- | 5 | |
| Y | EP-A-0 118 609 (UNION CARBIDE) * Seite 5, Zeilen 18-34; Seite 10, Zeile 34 - Seite 11, Zeile 4; Anspruch 1; Figur 3 * --- | 5 | |
| A | GB-A-2 058 440 (BEREC GROUP LTD) * Ansprüche 1,9; Seite 2, Zeilen 70-74 * --- | 2 | |
| A | EP-A-0 182 596 (UNION CARBIDE) * Ansprüche 1,11,13; Seite 9, Zeilen 1-22; Seite 9, Zeile 34 - Seite 10, Zeile 14; Beispiel 1 * --- | 1,3 | |
| A | EP-A-0 037 122 (HITACHI MAXELL) * Seite 3, Zeilen 16-19; Seite 4, Zeilen 22-26; Seite 12, Zeilen 13-24 * --- | 1,5 | RECHERCHIERTE SACHGEBIETE (Int. Cl.4) H 01 M |
| A | DE-B-1 046 131 (ACCUMULATOREN-FABRIK AG) * Ansprüche 1,4; Spalte 3, Zeilen 5-8 * --- | 4 | |
| A | GB-A-2 139 807 (BRITISH EVER READY LTD) * Seite 1, Zeilen 41,42; Figur 1 * ----- | 5 | |

Der vorliegende Recherchenbericht wurde für alle Patentansprüche erstellt

| Recherchenort | Abschlußdatum der Recherche | Prüfer |
|---|---|---|
| DEN HAAG | 20-05-1988 | D'HONDT J.W. |

EPO FORM 1503 03.82 (P0403)